# EUROPEAN PATENT SPECIFICATION

(11) **EP 2 533 435 B1**
(45) Date of publication and mention of the grant of the patent: **26.10.2016**
(21) Application number: 11290258.0
(22) Date of filing: 06.06.2011
(51) Int. Cl.: H04B 10/69, H04B 10/2581

(54) **Spatial mode gain equalization**
Raummodus-Verstärkungsausgleich
Égalisation de gains en mode spatial

(43) Date of publication of application: 12.12.2012
(73) Proprietor: ALCATEL LUCENT, 92100 Boulogne-Billancourt (FR)
(72) Inventor: Koebele, Clemens, 91620 Nozay (FR); Charlet, Gabriel, 91620 Nozay (FR)
(74) Representative: Berthier, Karine

(56) References cited:
- EP-A1- 2 244 113
- EP-A1- 2 333 990
- WO-A2-02/05207
- TSEKREKOS C P ET AL: "Temporal Stability of a Transparent Mode Group Diversity Multiplexing Link", IEEE PHOTONICS TECHNOLOGY LETTERS, IEEE SERVICE CENTER, PISCATAWAY, NJ, US, vol. 18, no. 23, 1 December 2006 (2006-12-01), pages 2484-2486, XP011150559, ISSN: 1041-1135, DOI: 10.1109/LPT.2006.886978

## Description

The present document relates to optical transmission systems. In particular, the present document relates to the amplification of various spatial modes of a multi-mode fiber using a common optical amplifier.

A potential solution to further increase the capacity in optical transmission systems is to exploit more than one spatial propagation mode in an optical multi-mode fiber (MMF). By doing this, the capacity of a single fiber can be increased by a factor which corresponds to the number of propagated modes. In this context, it would be beneficial to enable the amplification of some or all spatial propagation modes of the MMF using a common amplifier.

Alternatively, different amplifiers could be used for the different spatial propagation modes. This, however, would require the isolation of the different spatial propagation modes from the MMF, thereby leading to a complex implementation. When using dedicated amplifiers for each spatial propagation mode, the use of multiple modes in MMFs would most likely lose part of its advantages over a solution where the capacity is increased by the deployment of more single mode fibers.

In view of the above, the present document describes methods and systems which allow for a joint amplification of a plurality of propagation modes in a MMF. Using the methods and systems described in the present document, it can be ensured that at the output of a transmission span of the MMF, the different propagation modes of the MMF have substantially the same optical power as at the input of the transmission span. In other words, it can be ensured that the power ratio between the different propagation modes of the MMF at the input of the transmission span is maintained at the output of the transmission span and/or at the input of the following transmission span.

EP2333990A1 describes a network arrangement configured to equalize a first and a second mode in a multi-mode fiber.

Another device for transforming multiple modes is known from US-A-6 377 726.

According to an aspect, a system, e.g. an optical transmission system, is described. The system may comprise one or more transmission spans. In particular, the system may comprise a multi-mode fiber (or a segment of a multi-mode fiber) carrying a plurality of spatial modes. Each of the spatial modes may be used as a separate information channel for the transmission of data. That is, each spatial mode may be separately modulated with data, thereby providing a number of information channels which corresponds to the number of spatial modes within the plurality of spatial modes. The number of spatial modes may be 2, 3, 4, 5 or more, 10 (or more, or less), 20 (or more, or less), 30 (or more, or less), 40 (or more, or less), 50 (or more, or less) and/or 60 (or more, or less) spatial modes.

The system may comprise a multi-mode amplifier configured to jointly amplify the power of the plurality of spatial modes. As such, the multi-mode amplifier may be configured to amplify the plurality of spatial modes which are carried within the multi-mode fiber without the need of de-multiplexing the plurality of spatial modes. The multi-mode amplifier may comprise a multi-mode waveguide configured to carry the plurality of spatial modes. The multi-mode waveguide may be coupled to the multi-mode fiber (e.g. through the use of butt coupling) such that the plurality of spatial modes are coupled from the multi-mode fiber to the multi-mode waveguide (and/or vice versa). The multi-mode amplifier may comprise an active material (e.g. an optically pumped or electrically pumped material) configured to jointly increase the power of the plurality of spatial modes. By way of example, the multi-mode amplifier may be an Erbium doped optical fiber amplifier or a semiconductor optical amplifier.

The system may comprise an optical spatial mode gain equalizer. The optical spatial mode gain equalizer may be positioned downstream of the multi-mode amplifier (with respect to the propagation direction of the plurality of spatial modes within the multi-mode fiber). As such, mode gain equalization may be performed subsequently to multi-mode amplification. Alternatively, the optical spatial mode gain equalizer may be positioned upstream of the multi-mode amplifier. That is, mode gain equalization may be performed prior to multi-mode amplification. In case of a double- or multi- stage amplifier comprising two (or more) amplification stages, the gain equalization may be performed in between two stages of the double- or multi- stage amplifier.

The optical spatial mode gain equalizer may be configured to attenuate the power of a first spatial mode of the plurality of spatial modes with respect to the power of a second spatial mode of the plurality of spatial modes. Alternatively or in addition, the optical spatial mode gain equalizer may be configured to selectively attenuate one of the plurality of spatial modes to a higher extent than some or all of the other plurality of spatial modes.

The optical spatial mode gain equalizer comprises a 4f-correlator. As such, the optical spatial mode gain equalizer may comprise (at an input of the optical spatial mode gain equalizer) an input interface configured to position an end face of the multi-mode fiber at a first distance of a first lens. The first distance may be associated with the focal length of the first lens. In particular, the first distance may be the focal length of the first length. The focal length of the first lens may be "f". The plurality of spatial modes may have an input field distribution at the end face of the multi-mode fiber. The input field distribution may describe the distribution of optical amplitudes and/or phases of each of the plurality of modes across the radius of the end face of the multi-mode fiber. As such, the input field distribution may provide a spatial distribution of the energy or optical power across the radius of the multi-mode fiber.

The optical spatial mode gain equalizer may comprise the first lens. The first lens may be configured to Fourier transform the input field distribution of the plurality of spatial modes, thereby yielding a transformed field distribution. In other words, the first lens may be configured to transform the input field distribution into the spatial frequency domain. The transformed field distribution may be obtained at a distance "f" from the optical plane of the first lens.

The optical spatial mode gain equalizer may comprise a filtering mask downstream of the first lens. The filtering mask may be positioned at the distance "f" from the optical plane of the first lens. The filtering mask may be configured to attenuate the transformed field distribution such that the power of the first spatial mode is attenuated with respect to the power of the second spatial mode. For this purpose, the filtering mask may be configured to attenuate the transformed field distribution. In particular, the filtering mask may be configured to modify the magnitude of the (complex) transformed field distribution without modifying the phase of the transformed field distribution. The filtering mask may be configured to attenuate a pre-determined zone or region of the transformed field distribution. The zone may be symmetrical with respect to an optical axis of the first lens. As such, the zone may comprise one or more circles and/or rings around the center axis of the multi-mode fiber.

The filtering mask may comprise or may be implemented as a reprogrammable optical device. The reprogrammable optical device may be configured to tune the attenuation of the power of the first mode with respect to the power of the second mode. In other words, the reprogrammable optical device may be configured to change the attenuation incurred by one of the plurality of spatial modes with respect to the attenuation incurred by the remaining ones of the plurality of spatial modes. The reprogrammable optical device may be a liquid crystal on silicon (LCOS) device.

The optical spatial mode gain equalizer may comprise a second lens configured to perform an inverse Fourier transform on the filtered and transformed field distribution, thereby yielding an output field distribution. In other words, the second lens may be configured to perform an inverse transform on the filtered and transformed field distribution into the spatial domain, thereby yielding the output field distribution comprising the plurality of spatial modes. The second lens may have a focal length "f". Furthermore, the second lens may be positioned at a distance "f" downstream of the filtering mask.

As such, the second lens may be configured to focus the filtered and transformed field distribution onto an end face of a (second) multi-mode fiber at the output of the optical spatial mode gain equalizer. For this purpose, the optical spatial mode gain equalizer may comprise an output interface configured to position an end face of the second multi-mode fiber at a second distance from the second lens, thereby coupling the output field distribution into the second multi-mode fiber. The second distance may be associated with the focal length of the second length. In particular, the second distance may be the focal point of the second lens. The second multi-mode fiber may be part of a second transmission span of the transmission system. As such, the end face of the second multi-mode fiber at the focal point of the second lens may constitute the start of the second transmission span. At the same time, this point may constitute the end of the prior (i.e. first) transmission span.

As already indicated above, the multi-mode amplifier and the optical spatial mode gain equalizer may be part of a transmission span of the transmission system and/or the multi-mode fiber. The multi-mode amplifier and the optical spatial mode gain equalizer may be positioned at an end of the transmission span. The transmission system may comprise a plurality of transmission spans, wherein each transmission span may comprise a respective multi-mode amplifier and a respective optical spatial mode gain equalizer. In other words, at the end of each transmission span, the plurality of spatial modes may be amplified and the gain which is applied to each of the plurality of spatial modes may be equalized.

The optical spatial mode gain equalizer may be configured such that at an output of the optical spatial mode gain equalizer, the relative power ratio between the first and second spatial modes is substantially equal to the relative power ratio between the first and second spatial modes at the start of the transmission span. In other words, each of the plurality of spatial modes may have a corresponding start power at the start of the transmission span, thereby providing a plurality of start powers. At the end of a transmission span, each of the plurality of spatial modes may have a corresponding end power, thereby providing a plurality of end powers. The optical spatial mode gain equalizer may be configured such that the relative ratios between powers of the plurality of end powers substantially correspond to the corresponding relative ratios between powers of the plurality of start powers. In a particular embodiment, the optical spatial mode gain equalizer is configured such that corresponding powers of the plurality of end powers and the plurality of start powers are substantially equal.

The optical transmission system, e.g. an optical transmitter within the optical transmission system, may be configured to select the launching power of the plurality of modes at the start of the (first) transmission span. The launching powers of the plurality of spatial modes may be selected such that the relative power ratio between the first and second spatial modes at the start of the transmission span is such that a measure of the power difference between the first and second spatial modes along the transmission span is below a predetermined power threshold. In other words, the launching powers of the plurality of spatial modes (i.e. the plurality of start powers) may be selected such that a measure of the power difference between the plurality of spatial modes along the transmission span is below a predetermined power threshold. The measure of the power difference may e.g. be a maximum (absolute) power difference along the transmission span or an average (absolute) power difference along the transmission span.

According to a further aspect, the use of a 4f correlator for selectively attenuating the power of a first spatial mode of a plurality of spatial modes carried within a multi-mode fiber with respect to the power of a second spatial mode of the plurality of spatial modes is described.

According to another aspect, a method for efficiently transmitting a plurality of spatial modes within a multi-mode fiber is described. In particular, the method is directed at enabling the efficient transmission of a plurality of individual information channels using the corresponding plurality of spatial modes. The method may comprise carrying the plurality of spatial modes within a multi-mode fiber from a start of a transmission span to an end of the transmission span. Within the transmission span, e.g. at the end of the transmission span, the method may proceed in jointly amplifying the plurality of spatial modes. The joint amplification may be performed within a multi-mode waveguide which carries the plurality of spatial modes. In particular, the joint amplification may be performed without de-multiplexing the plurality of spatial modes from the multi-mode waveguide.

The method may comprise selectively attenuating the power of a first spatial mode of the plurality of spatial modes with respect to the power of a second spatial mode of the plurality of spatial modes. The selective attenuation may be performed prior or subsequent to the joint amplification.

The selective attenuation may comprise transforming an input field distribution of the plurality of spatial modes into the spatial frequency domain, thereby yielding a transformed field distribution. The input field distribution may be provided at the end face of the multi-mode fiber. Subsequent to a transform into the spatial frequency domain, the method may proceed in attenuating the transformed field distribution. Finally, the method may proceed in performing an inverse transform on the filtered and transformed field distribution into the spatial domain, thereby yielding an output field distribution comprising the plurality of spatial modes. As a result of this, the power of the first spatial mode may be selectively attenuated with respect to the power of the second spatial mode.

According to another aspect, an optical spatial mode gain equalizer is described. The optical spatial mode gain equalizer may be configured as outlined in the present document. In particular, the optical spatial mode gain equalizer may comprise an input interface configured to position an end face of a first multi-mode fiber at a focal point of a first lens. The first multi-mode fiber may carry a plurality of spatial modes having an input field distribution at the end face of the first multi-mode fiber.

Furthermore, the optical spatial mode gain equalizer may comprise the first lens. The first lens may be configured to Fourier transform the input field distribution of the plurality of spatial modes, thereby yielding a transformed field distribution. In addition, the optical spatial mode gain equalizer may comprise a filtering mask, downstream of the first lens. The filtering mask may be configured to selectively attenuate the power of a first spatial mode of the plurality of spatial modes with respect to the power of a second spatial mode of the plurality of spatial modes. By means of a second lens, the optical spatial mode gain equalizer may be configured to perform an inverse Fourier transform on the filtered and transformed field distribution, thereby yielding an output field distribution. Furthermore, the optical spatial mode gain equalizer may comprise an output interface configured to position an end face of a second multi-mode fiber at a focal point of the second lens, thereby coupling the output field distribution into the second multi-mode fiber.

It should be noted that the methods and systems including its preferred embodiments as outlined in the present document may be used stand-alone or in combination with the other methods and systems disclosed in this document. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
Fig. 1 illustrates an example optical transmission system and the power of example propagation modes along the optical transmission system;
Fig. 2 illustrates an example optical transmission system comprising spatial mode equalizers;
Fig. 3 shows an example configuration of a spatial mode equalizer;
Fig. 4 illustrates the radial field distribution of example propagation modes;
Fig. 5 shows an example configuration of a filtering mask of a spatial mode equalizer; and
Fig. 6 shows example spatial attenuation profiles of the filtering mask of a spatial mode equalizer.

The purpose of amplifiers in optical transmission systems is to compensate for the occurred loss after a span of the optical transmission fiber. In single-mode transmission systems the amplifier gain and span length can be adapted so that the amplifiers compensate exactly for the span loss. However, in multi-mode transmission systems the span loss and/or the amplifier gain typically vary from one mode to another. By way of example, the LP01-mode (i.e. the "fundamental" mode) could have a lower attenuation and a higher gain than higher order propagation modes. As a result, the power of the different modes is different after the transmission over the multi-mode transmission system, leading to different optical signal-to-noise ratios of the different modes, leading to a different impact of nonlinear effects on the different modes and thus leading to different bit error rates for data transmitted over the different propagation modes. As a result of the different loss and the different gain of the modes of the MMF, the efficient use of some or all of the modes of the MMF is compromised.

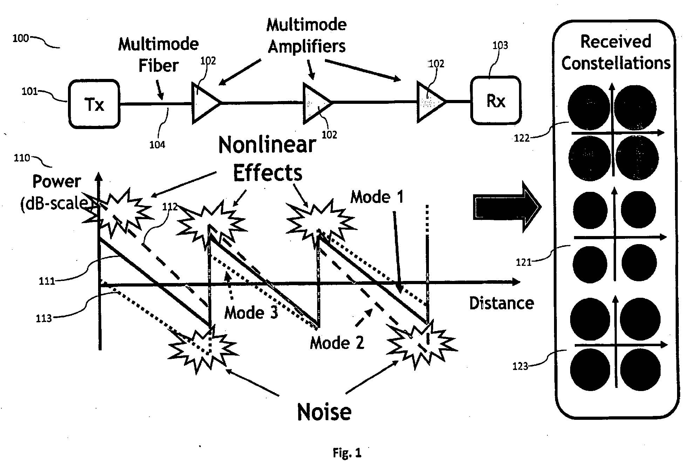

This is illustrated schematically in Fig. 1 which shows an example optical transmission system 100 and the power 110 of example propagation modes transmitted via the optical transmission system 100. The optical transmission system 100 comprises an optical transmitter 101, a multi-mode fiber (MMF) 104 and an optical receiver 103. The optical transmission system 100 is segmented into a plurality of transmission spans, wherein at the end of each transmission span, the optical signals which are propagating within the MMF 104 are amplified using a multi-mode amplifier 102.

The effects of the attenuation of the transmission system 100 and the effects of the optical amplification on the power of the different propagation modes of the MMF 104 are illustrated in power diagram 110. The power of three different modes is illustrated, i.e. the power 111 of mode 1 (solid line), the power 112 of mode 2 (dashed line) and the power 113 of mode 3 (dotted line). It can be seen that due to the attenuation of the MMF 104, the power of each propagation mode decreases along the MMF 104. The attenuations incurred by the propagation modes differ which is indicated by the different slopes of the power curves 111, 112, 113 along the MMF 104.

At the end of each transmission span, the different propagation modes are amplified using a multi-mode amplifier 102. Possible implementations of the multi-mode amplifier 102 are e.g. fiber amplifiers such as Erbium doped fiber amplifiers (EDFA) or semiconductor optical amplifiers (SOA). The multi-mode amplifier 102 usually comprises a single multi-mode waveguide which carries the plurality of propagation modes from the MMF 104. The multi-mode waveguide usually traverses an active material and thereby amplifies the plurality of propagation modes. Typically, the different propagation modes from the plurality of propagation modes are amplified at a different gain which depends on the corresponding propagation mode. This is illustrated by the different level of power added to the power curves 111, 112, 113 at the amplifiers 102.

The different degree of attenuation may be partly compensated by transmitting the different optical modes at different launching powers (as illustrated in Fig. 1). This solution, however, may only be used for a relatively low span count, i.e. a relatively short total fiber length. Furthermore, it can be seen from Fig. 1 that the power curves 111, 112, 113 of the different modes have minimum power values, as well as maximum power values which differ significantly from one mode to the next. The different minimum power values typically lead to a different impact of noise on the different optical propagation modes. On the other hand, the different maximum power values typically lead to a different impact of nonlinear effects (i.e. nonlinear distortions) on the optical propagation modes. This leads to different signal-to-noise ratios and ultimately to different bit error rates for the data which is transmitted via the different propagation modes.

The effect on the bit error rate is illustrated in Fig. 1 by showing the received constellations (after equalization) 121, 122, 123 for data transmitted via the modes 1, 2 and 3, respectively. It can be seen that the constellation points of the received constellations 121, 122, 123 have different radii, wherein the different radii indicate different bit error rates.

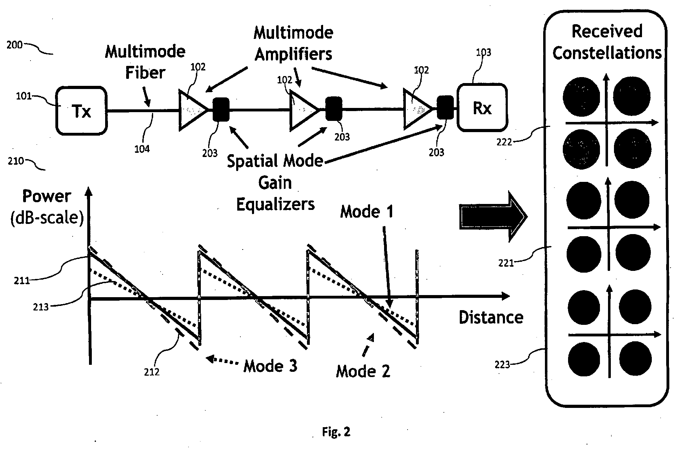

It is proposed in the present document to insert an equalizer into the transmission system 100 in order to match the effective amplifier gain of some or all modes to their corresponding span loss. This is illustrated in Fig. 2 which shows an optical transmission system 200 comprising spatial mode gain equalizers 203 in conjunction with the multi-mode amplifiers 102. The effect of the spatial mode gain equalizers 203 on the power curves 211, 212, 213 of the propagation modes 1, 2, 3, respectively, is illustrated in diagram 210. In a similar manner to the transmission system 100, the different propagation modes are attenuated differently by the MMF 104 (illustrated by the different slopes of the power curves 211, 212, 213). However, using the spatial mode gain equalizers 203, the gain for each propagation mode may be adjusted such that the power of each propagation mode is significantly aligned with its launching power (or a proportional value thereof). In other words, the spatial mode gain equalizers 203 may be adapted to restore the relative power relationship of the different propagation modes.

By way of example, the different propagation modes may be launched at different launching powers which take into account the different attenuation incurred by the propagation modes on the MMF 104. The different launching powers may be selected such that a maximum power difference of the power of the different propagation modes 1, 2, 3 is minimized along a transmission span. Alternatively, an average power difference of the power of the different propagation modes 1, 2, 3 may be minimized along a transmission span. As such, it may be ensured that the different propagation modes 1, 2, 3 are similarly affected by noise and/or non-linear distortion effects.

In order to achieve such power difference criteria, the ratios of the power of the different propagation modes 1, 2, 3 at the input of a transmission span may be significantly reversed at the end of a transmission span (prior to amplification and/or spatial mode gain equalization). The multi-mode amplifier 102 may be configured to amplify the plurality of propagation modes 1, 2, 3 jointly. This will typically lead to the application of different gain values to the different propagation modes 1, 2, 3. The spatial mode gain equalizer 203 may be configured to modify the applied gain and to restore the initial relative power ratios, i.e. the relative power ratios between the propagation modes at the input of the transmission span.

It can be seen that as a result of the use of a spatial mode gain equalizer 203, the power curves 211, 212, 213 are similar to one another. In particular, it can be seen that the respective minimum power values and the respective maximum power values are similar for all propagation modes. This results in the propagation modes being submitted to similar degrees of noise and/or non-linear effects.

Consequently, the bit error rates of data transmitted via the different propagation modes are similar as well, as illustrated by the received constellations 221, 222, 223.

A spatial mode gain equalizer can be implemented using a so-called 4f-correlator 300 as it is known from Fourier optics. The first lens 312 performs a 2-dimensional-Fourier transform of the spatial mode function at the output 311 of the fiber 301, thereby yielding a field or Fourier transform in the spatial frequency domain. The resulting field is then spatially filtered by a mask 313 that provides a variable attenuation as a function of the spatial frequency coordinate. This mask 313 may be designed in order to obtain the desired attenuation for each propagation mode of the MMF 301. Finally, the output field is transformed backwards into the spatial domain by another lens 314 and sent to the input 315 of an optical fiber 305.

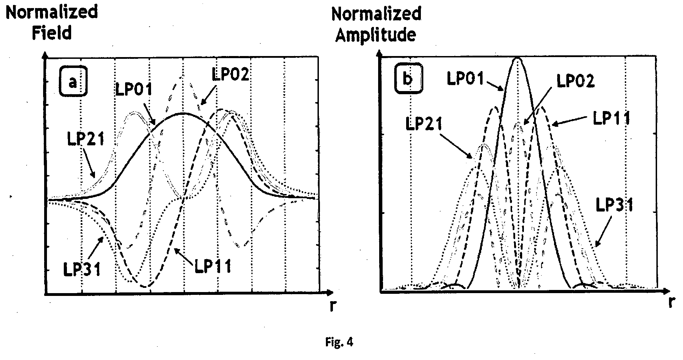

By way of example, a few-mode transmission system 200 allowing the propagation of the LP01, LP02, LP11, LP21 and the LP31 modes is analyzed. Fig. 4a depicts the radial distribution of the intensity of these 5 spatial propagation modes in a step index fiber 104. Fig. 4b depicts the radial distribution of the amplitude of the corresponding 2-dimensional Fourier transform. It can be seen that the amplitude of the Fourier transform of the propagation modes forms rings around the center axis of the fiber 104. Furthermore, it can be seen that the maximum amplitude for the different propagation modes is positioned in different rings around the center axis of the fiber 104. As such, the filtering mask 313 of the spatial mode equalizer 203, 300 may be implemented using attenuation rings for the different propagation modes, thereby modifying the power of the different propagation modes.

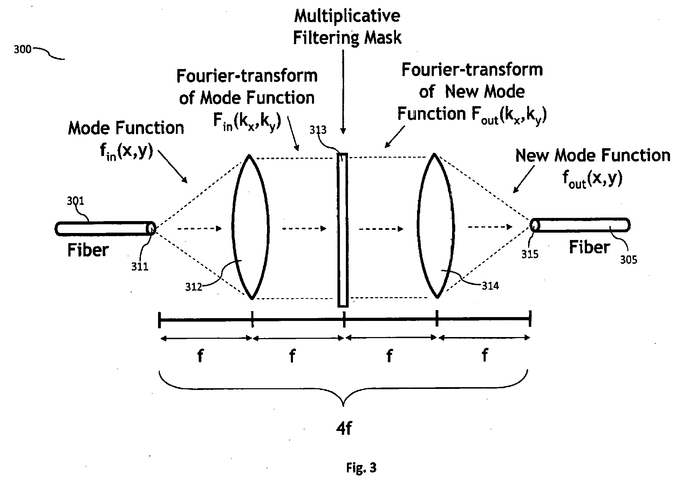

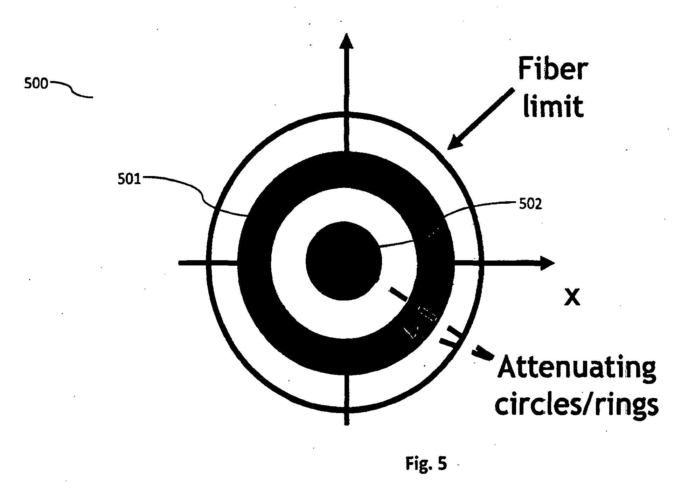

As outlined above, Fig. 3 shows an example set up of the 4f-correlator 300 used to realize the spatial mode equalizer 203. At the output 311 of the multi-mode fiber 301 the spatial field is distributed according to the mode function fᵢₙ(x,y). Then a lens is used to perform a 2-dimensional Fourier transform providing a Fourier transform Fᵢₙ(kₓ,k_{y}) of the mode function and the resulting field in the spatial frequency domain is filtered by an optical filtering mask 313. An example implementation of the filtering mask 313 having a profile 500 is depicted in Fig.5. The grey circle 502 in the center and the grey ring 501 represent two example zones were an appropriate attenuation can be applied. The number, size and/or the position of such circles 502 and/or rings 501 can be chosen such that particular areas of the Fourier transform Fᵢₙ(kₓ,k_{y}) of the mode function are attenuated in a pre-determined manner, thereby yielding a modified or filtered Fourier transform Fₒᵤₜ(kₓ,k_{y}). After the filtering, the modified Fourier transform passes through a second lens 314 to perform an inverse Fourier transformation, thereby yielding the modified mode function fₒᵤₜ(x,y). The modified mode function is coupled into the second multimode fiber 305.

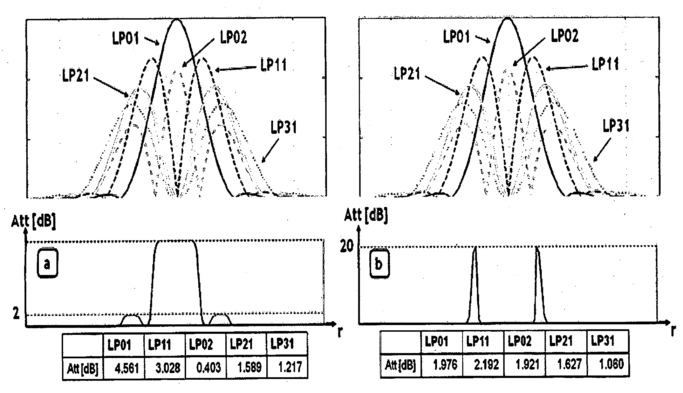

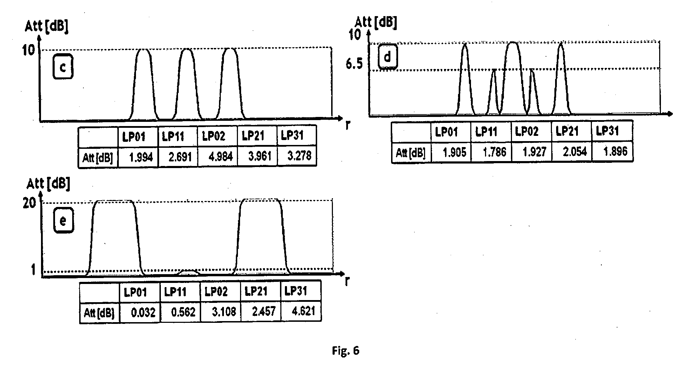

In Fig. 6 different example profiles 500 for a filtering mask 313 are depicted. The different profiles lead to different attenuations of the five propagating modes LP01, LP 11, LP02, LP21, LP31. The values for the attenuation of each mode when using the respective profile are depicted in the tables below each profile sketch. If, for example, the LP01 mode has a lower loss during fiber propagation and/or a higher gain in the amplifier 102 than the other propagation modes, a filtering mask 313 providing attenuation similar to the profile of Fig. 6a could be applied. This means that the lower propagation loss and/or the higher amplification gain of the LP01 mode compared to the other modes, may be compensated by appropriately and selectively attenuating the magnitude of the Fourier transform of the LP01 mode. For this purpose, the profile of the filtering mask of Fig. 6a comprises a central circle 502 which attenuates the central lobe of the Fourier transform of the mode function of the LP01 mode. In a similar manner, the profile of Fig. 6b comprises a ring 501 which attenuates the main lobe of the Fourier transform of the mode function of the LP11 mode. The same applies to the profiles of Figs. 6c, 6d and 6f.

It is shown in Fig. 6 that different attenuation profiles 500 of the filtering mask 313 may be designed in order to selectively attenuate a different spatial mode. It can be seen from Fig. 6 that it is possible to design filtering mask which apply a selective attenuation to a particular one of the spatial modes. As such, Fig.6 shows for each of the example spatial modes, an attenuation profile of the filtering mask 313 that leads to a selective attenuation of the respective spatial mode. Overall, it may be stated that the profile 500 of the filtering mask 313 may be adapted to attenuate selected bands of the Fourier transform of the mode function of one or more propagation modes. As such, the fields of the one or more propagation modes may be attenuated selectively.

It should be noted that the spatial mode gain equalizers 203, 300 can be designed with a different degree of flexibility, e.g. by implementing differently the filtering mask 313 in the center of the 4f-correlator. In particular, spatial mode gain equalizers 203, 300 may be implemented for static equalization or tunable equalization. In case of static equalization, the degree of attenuation of the different modes may be fixed, whereas in case of tunable equalization, the degree of attenuation of the different modes may be changed, e.g. depending on the loss in the transmission span and/or the length of the transmission span.

A static spatial mode gain equalizers 300 may be implemented using a fixed filtering mask 313. On the other hand, a tunable spatial mode gain equalizers 300 may be implemented using a tunable filtering mask 313. By way of example, the filtering mask 313 may comprise attenuation rings 501 and/or circles 502 at fixed positions, whereas the degree of attenuation of the rings 501 and/or circles 502 may be tunable. This would lead to a roughly tunable spatial mode gain equalizers 300. A finely tunable spatial mode gain equalizer 300 could make use of a filtering mask 313 which comprises tunable zones 501, 502 of attenuation, as well as tunable degrees of attenuation. The implementation of a tunable filtering mask 313 could be implemented using a reprogrammable optical device such as an LCOS (liquid crystal on silicon).

The present document describes methods and systems which allow for common optical amplification of various propagation modes in a multi-mode fiber. The methods and systems make use of spatial mode gain equalization in order to control the degree of amplification applied to some or all of the propagation modes within the multi-mode fiber. The spatial mode gain equalization may be implemented using an optical 4f-correlator and an appropriately designed filtering mask. By making use of spatial mode gain equalization, a controlled joint amplification of a plurality of spatial propagation modes within a multi-mode fiber can be implemented, thereby enabling the use of multi-mode fiber based transmission systems.

It should be noted that the description and drawings merely illustrate the principles of the proposed methods and systems. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A system (200) comprising:
- a multi-mode amplifier (102) configured to jointly amplify a plurality of optical powers of a corresponding plurality of spatial modes carried by a multi-mode fiber (104, 301); and
- an optical spatial mode gain equalizer (203, 300) configured to attenuate the optical power of a first spatial mode of the plurality of spatial modes with respect to the optical power of a second spatial mode of the plurality of spatial modes; wherein the optical spatial mode gain equalizer (203, 300) comprises a 4f-correlator (300).

2. The system (200) of claim 1, wherein the optical spatial mode gain equalizer (203, 300) comprises
- an input interface (311) configured to position an end face of the multi-mode fiber (301) at a first distance of a first lens (312); wherein the plurality of spatial modes have an input field distribution at the end face of the multi-mode fiber (301);
- the first lens (312) configured to Fourier transform the input field distribution of the plurality of spatial modes, thereby yielding a transformed field distribution;
- a filtering mask (313), downstream of the first lens (312), configured to attenuate the transformed field distribution such that the power of the first spatial mode is attenuated with respect to the power of the second spatial mode;
- a second lens (314) configured to perform an inverse Fourier transform on the filtered and transformed field distribution, thereby yielding an output field distribution.

3. The system (200) of claim 2, wherein the optical spatial mode gain equalizer (203, 300) further comprises
- an output interface (315) configured to position an end face of a second multi-mode fiber (305) at a second distance of the second lens (314), thereby coupling the output field distribution into the second multi-mode fiber (305).

4. The system (200) of any of claims 2 to 3, wherein the filtering mask (313) is configured to attenuate a pre-determined zone of the transformed field distribution.

5. The system (200) of claim 4, wherein the zone is symmetrical with respect to an optical axis of the first lens (312).

6. The system (200) of any of claims 2 to 5, wherein the filtering mask (313) comprises a reprogrammable optical device configured to tune the attenuation of the optical power of the first mode with respect to the optical power of the second mode.

7. The system (200) of any previous claim, wherein
- the multi-mode fiber (104) carries the plurality of spatial modes in a propagation direction; and
- the optical spatial mode gain equalizer (203, 300) is positioned downstream of the multi-mode amplifier (102).

8. The system (200) of any previous claim, wherein
- the multi-mode amplifier (102) and the optical spatial mode gain equalizer (203, 300) are positioned at an end of a transmission span of the multi-mode fiber (104); and
- the optical spatial mode gain equalizer (203, 300) is configured such that at an output of the optical spatial mode gain equalizer (203, 300), the relative power ratio between the first and second spatial modes is substantially equal to the relative power ratio between the first and second spatial modes at a start of the transmission span.

9. The system (200) of claim 8, wherein the relative power ratio between the first and second spatial modes at the start of the transmission span is such that a measure of the power difference between the first and second spatial modes along the transmission span is below a predetermined power threshold.

10. The system (200) of any previous claim, comprising a plurality of transmission spans, wherein each transmission span comprises a respective multi-mode amplifier (102) and a respective optical spatial mode gain equalizer (203, 300).

11. The system (200) of any previous claim, wherein the multi-mode amplifier (102)
- comprises a multi-mode waveguide configured to carry the plurality of spatial modes; and/or
- comprises an active material configured to jointly increase the plurality of optical powers of the corresponding plurality of spatial modes; and/or
- is an Erbium doped optical fiber amplifier or a semiconductor optical amplifier.

12. Use of a 4f correlator for selectively attenuating an optical power of a first spatial mode of a plurality of spatial modes carried within a multi-mode fiber (104) with respect to an optical power of a second spatial mode of the plurality of spatial modes.

13. A method for efficiently transmitting a plurality of spatial modes within a multi-mode fiber (104), the method comprising
- carrying the plurality of spatial modes within a multi-mode fiber (104) from a start of a transmission span to an end of the transmission span;
- at the end of the transmission span, jointly amplifying the plurality of spatial modes; and
- selectively attenuating a power of a first spatial mode of the plurality of spatial modes with respect to a power of a second spatial mode of the plurality of spatial modes using a 4f-correlator (300).

14. An optical spatial mode gain equalizer (300) comprising a 4f-correlator in the form of:
- an input interface (311) configured to position an end face of a first multi-mode fiber (301) at a first distance of a first lens (312); wherein the first multi-mode fiber carries a plurality of spatial modes having an input field distribution at the end face of the first multi-mode fiber (301);
- the first lens (312) configured to Fourier transform the input field distribution of the plurality of spatial modes, thereby yielding a transformed field distribution;
- a filtering mask (313), downstream of the first lens (312), configured to attenuate the transformed field distribution such that the power of a first spatial mode of the plurality of spatial modes with respect to the power of a second spatial mode of the plurality of spatial modes is selectively attenuated;
- a second lens (314) configured to perform an inverse Fourier transform on the filtered and transformed field distribution, thereby yielding an output field distribution; and
- an output interface (315) configured to position an end face of a second multi-mode fiber (305) at a second distance of the second lens (314), thereby coupling the output field distribution into the second multi-mode fiber (305).

## Patentansprüche

1. System (200) umfassend:
- einen Multimode-Verstärker (102), der konfiguriert ist zum gleichzeitigen Verstärken einer Vielzahl von optischen Leistungen einer entsprechenden Vielzahl von räumlichen Modi, die von einer Multimode-Faser (104, 301) transportiert werden; und
- einen Verstärkungsentzerrer (203, 300) für optische räumliche Modi, der konfiguriert ist zum Dämpfen der optischen Leistung eines ersten räumlichen Modus einer Vielzahl von räumlichen Modi in Bezug auf die optische Leistung eines zweiten räumlichen Modus der Vielzahl von räumlichen Modi; wobei der Verstärkungsentzerrer (203, 300) für optische räumliche Modi einen 4f-Korrelator (300) umfasst.

2. System (200) nach Anspruch 1, wobei der Verstärkungsentzerrer (203, 300) für optische räumliche Modi umfasst
- eine Eingangsschnittstelle (311), die konfiguriert ist zum Positionieren einer Stirnfläche der Multimode-Faser (301) in einem ersten Abstand von einer ersten Linse (312); wobei die Vielzahl von räumlichen Modi eine Eingangsfeldverteilung an der Stirnfläche der Multimode-Faser (301) aufweist;
- die erste Linse (312) ist konfiguriert für die Fouriertransformation der Eingangsfeldverteilung der Vielzahl von räumlichen Modi, unter Erzielen einer transformierten Feldverteilung;
- eine Filtermaske (313), stromabwärts der ersten Linse (312), die konfiguriert ist zum Dämpfen der transformierten Feldverteilung, sodass die Leistung des ersten räumlichen Modus gedämpft wird in Bezug auf die Leistung des zweiten räumlichen Modus;
- eine zweite Linse (314), die konfiguriert ist zum Durchführen einer inversen Fouriertransformation der gefilterten und transformierten Feldverteilung, unter Erzielen einer Ausgangsfeldverteilung.

3. System (200) nach Anspruch 2, wobei der Verstärkungsentzerrer (203, 300) für optische räumliche Modi weiterhin umfasst
- eine Ausgangsschnittstelle (315), die konfiguriert ist zum Positionieren einer Stirnfläche einer zweiten Multimode-Faser (305) in einem zweiten Abstand von der zweiten Linse (314), unter Koppeln der Ausgangsfeldverteilung in die zweite Multimode-Faser (305).

4. System (200) nach irgendeinem der Ansprüche 2 bis 3, wobei die Filtermaske (313) konfiguriert ist zum Dämpfen einer vorbestimmten Zone der transformierten Feldverteilung.

5. System (200) nach Anspruch 4, wobei die Zone symmetrisch ist in Bezug auf eine optische Achse der ersten Linse (312).

6. System (200) nach irgendeinem der Ansprüche 2 bis 5, wobei die Filtermasse (313) eine reprogrammierbare optische Vorrichtung umfasst, die konfiguriert ist zum Abstimmen der Dämpfung der optischen Leistung des ersten Modus in Bezug auf die optische Leistung des zweiten Modus.

7. System (200) nach irgendeinem der vorhergehenden Ansprüche, wobei
- die Multimode-Faser (104) die Vielzahl von räumlichen Modi in eine Ausbreitungsrichtung transportiert; und
- der Verstärkungsentzerrer (203, 300) für optische räumliche Modi stromabwärts des Multimode-Verstärkers (102) positioniert ist.

8. System (200) nach irgendeinem der vorhergehenden Ansprüche, wobei
- der Multimode-Verstärker (102) und der Verstärkungsentzerrer (203, 300) für optische räumliche Modi an einem Ende eines Übertragungsstreckenabschnitts der Multimode-Faser (104) positioniert sind; und
- der Verstärkungsentzerrer (203, 300) für optische räumliche Modi konfiguriert ist, sodass an einem Ausgang des Verstärkungsentzerrers (203, 300) für optische räumliche Modi das relative Leistungsverhältnis zwischen dem ersten und dem zweiten räumlichen Modus im Wesentlichen gleich ist dem relativen Leistungsverhältnis zwischen dem ersten und dem zweiten räumlichen Modus am Beginn des Übertragungsstreckenabschnitts.

9. System (200) nach Anspruch 8, wobei das relative Leistungsverhältnis zwischen dem ersten und dem zweiten Modus am Beginn des Übertragungsstreckenabschnitts so ist, dass eine Messung der Leistungsdifferenz zwischen dem ersten und dem zweiten räumlichen Modus entlang des Übertragungsstreckenabschnitts unterhalb eines vorbestimmten Leistungsgrenzwerts liegt.

10. System (200) nach irgendeinem der vorhergehenden Ansprüche, umfassend eine Vielzahl von Übertragungsstreckenabschnitten, wobei jeder Übertragungsstreckenabschnitt einen entsprechenden Multimode-Verstärker (102) und einen entsprechenden Verstärkungsentzerrer (203, 300) für optische räumliche Modi umfasst.

11. System (200) nach irgendeinem der vorhergehenden Ansprüche, wobei der Multimode-Verstärker (102)
- einen Multimode-Wellenleiter umfasst, der konfiguriert ist zum Transportieren der Vielzahl räumlicher Modi; und/oder
- ein aktives Material umfasst, das konfiguriert ist zum gleichzeitigen Erhöhen der Vielzahl von optischen Leistungen der entsprechenden Vielzahl von räumlichen Modi; und/oder
- ein erbiumdotierter faseroptischer Verstärker oder ein optischer Halbleiterverstärker ist.

12. Verwenden des 4f-Korrelators zum selektiven Dämpfen einer optischen Leistung eines ersten räumlichen Modus einer Vielzahl von räumlichen Modi, die innerhalb einer Multimode-Faser (104) transportiert werden in Bezug auf eine optische Leistung eines zweiten räumlichen Modus der Vielzahl optischer Modi.

13. Verfahren für das effiziente Übertragen einer Vielzahl von räumlichen Modi innerhalb einer Multimode-Faser (104), wobei das Verfahren umfasst
- Transportieren der Vielzahl von räumlichen Modi innerhalb der Multimode-Faser (104) von einem Beginn eines Übertragungsstreckenabschnitts zu einem Ende des Übertragungsstreckenabschnitts;
- am Ende des Übertragungsstreckenabschnitts gleichzeitiges Verstärken der Vielzahl von räumlichen Modi; und
- selektives Dämpfen eines ersten räumlichen Modus der Vielzahl von räumlichen Modi in Bezug auf eine Leistung eines zweiten räumlichen Modus der Vielzahl von räumlichen Modi unter Benutzen eines 4f-Korrelators (300).

14. Verstärkungsentzerrer (300) für optische räumliche Modi, umfassend einen 4f-Korrelator umfassend:
- eine Eingangsschnittstelle (311), die konfiguriert ist zum Positionieren einer Stirnfläche einer ersten Multimode-Faser (301) in einem ersten Abstand einer ersten Linse (312); wobei die erste Multimode-Faser eine Vielzahl räumlicher Modi transportiert und eine Eingangsfeldverteilung an der Stirnfläche der ersten Multimode-Faser (301) aufweist;
- die erste Linse (312), konfiguriert für die Fouriertransformation der Eingangsfeldverteilung der Vielzahl räumlicher Modi, unter Erzielen einer transformierten Feldverteilung;
- eine Filtermaske (313), stromabwärts von der ersten Linse (312), konfiguriert zum Dämpfen der transformierten Feldverteilung, sodass die Leistung eines ersten räumlichen Modus der Vielzahl räumlicher Modi in Bezug auf die Leistung eines zweiten räumlichen Modus der Vielzahl räumlicher Modi selektiv gedämpft wird;
- eine zweite Linse (314), die konfiguriert ist zum Durchführen einer inversen Fouriertransformation der gefilterten und transformierten Feldverteilung, unter Erzielen einer Ausgangsfeldverteilung; und
- eine Ausgangsschnittstelle (315), die konfiguriert ist zum Positionieren einer Stirnfläche einer zweiten Multimode-Faser (305) in einem zweiten Abstand der zweiten Linse (314), unter Koppeln der Ausgangsfeldverteilung in die zweite Multimode-Faser (305).

## Revendications

1. Système (200) comprenant :
- un amplificateur multimode (102) configuré pour amplifier conjointement une pluralité de puissances optiques d'une pluralité de modes spatiaux correspondants transportés par une fibre multimode (104, 301) ; et
- un égaliseur de gain de mode spatial optique (203, 300) configuré pour atténuer la puissance optique d'un premier mode spatial de la pluralité de modes spatiaux par rapport à la puissance optique d'un deuxième mode spatial de la pluralité de modes spatiaux, l'égaliseur de gain de mode spatial optique (203, 300) comprenant un corrélateur 4f (300).

2. Système (200) selon la revendication 1, dans lequel l'égaliseur de gain de mode spatial optique (203, 300) comprend :
- une interface d'entrée (311) configurée pour positionner une face d'extrémité de la fibre multimode (301) à une première distance d'une première lentille (312), dans laquelle la pluralité de modes spatiaux a une distribution de champ d'entrée au niveau de la face d'extrémité de la fibre multimode (301) ;
- la première lentille (312) configurée pour effectuer une transformée de Fourier sur la distribution de champ d'entrée de la pluralité de modes spatiaux, produisant ainsi une distribution de champ transformée ;
- un masque de filtrage (313), en aval de la première lentille (312), configuré pour atténuer la distribution de champ transformée de sorte que la puissance du premier mode spatial soit atténuée par rapport à la puissance du deuxième mode spatial ;
- une deuxième lentille (314) configurée pour effectuer une transformée de Fourier inverse sur la distribution de champ filtrée et transformée, produisant ainsi une distribution de champ de sortie.

3. Système (200) selon la revendication 2, dans lequel l'égaliseur de gain de mode spatial optique (203, 300) comprend en outre :
- une interface de sortie (315) configurée pour positionner une face d'extrémité d'une deuxième fibre multimode (305) à une deuxième distance de la deuxième lentille (314), couplant ainsi la distribution de champ de sortie à la deuxième fibre multimode (305).

4. Système (200) selon l'une quelconque des revendications 2 à 3, dans lequel le masque de filtrage (313) est configuré pour atténuer une zone prédéterminée de la distribution de champ transformée.

5. Système (200) selon la revendication 4, dans lequel la zone est symétrique par rapport à un axe optique de la première lentille (312).

6. Système (200) selon l'une quelconque des revendications 2 à 5, dans lequel le masque de filtrage (313) comprend un dispositif optique reprogrammable configuré pour régler l'atténuation de la puissance optique du premier mode par rapport à la puissance optique du deuxième mode.

7. Système (200) selon l'une quelconque des revendications précédentes, dans lequel :
- la fibre multimode (104) transporte la pluralité de modes spatiaux dans un sens de propagation ; et
- l'égaliseur de gain de mode spatial optique (203, 300) est positionné en aval de l'amplificateur multimode (102).

8. Système (200) selon l'une quelconque des revendications précédentes, dans lequel :
- l'amplificateur multimode (102) et l'égaliseur de gain de mode spatial optique (203, 300) sont positionnés à une extrémité d'un tronçon de transmission de la fibre multimode (104) ; et
- l'égaliseur de gain de mode spatial optique (203, 300) est configuré de sorte qu'au niveau d'une sortie de l'égaliseur de gain de mode spatial optique (203, 300), le rapport de puissance relatif entre le premier et le deuxième mode spatial soit substantiellement égal au rapport de puissance relatif entre le premier et le deuxième mode spatial à un début du tronçon de transmission.

9. Système (200) selon la revendication 8, dans lequel le rapport de puissance relatif entre le premier et le deuxième mode spatial au début du tronçon de transmission est tel qu'une mesure de la différence de puissance entre le premier et le deuxième mode spatial le long du tronçon de transmission est en dessous d'un seuil de puissance prédéterminé.

10. Système (200) selon l'une quelconque des revendications précédentes, comprenant une pluralité de tronçons de transmission, dans lequel chaque tronçon de transmission comprend un amplificateur multimode (102) respectif et un égaliseur de gain de mode spatial optique (203, 300) respectif.

11. Système (200) selon l'une quelconque des revendications précédentes, dans lequel l'amplificateur multimode (102) :
- comprend un guide d'onde multimode configuré pour transporter la pluralité de modes spatiaux ; et/ou
- comprend un matériau actif configuré pour amplifier conjointement la pluralité de puissances optiques de la pluralité de modes spatiaux correspondants ; et/ou
- est un amplificateur à fibre optique dopée à l'Erbium ou un amplificateur optique à semi-conducteur.

12. Utilisation d'un corrélateur 4f pour atténuer sélectivement une puissance optique d'un premier mode spatial d'une pluralité de modes spatiaux transportés dans une fibre multimode (104) par rapport à la puissance optique d'un deuxième mode spatial de la pluralité de modes spatiaux.

13. Procédé destiné à transmettre efficacement une pluralité de modes spatiaux dans une fibre multimode (104), comprenant les étapes suivantes :
- transporter la pluralité de modes spatiaux dans une fibre multimode (104) depuis le début d'un tronçon de transmission jusqu'à la fin du tronçon de transmission ;
- à la fin du tronçon de transmission, amplifier conjointement la pluralité de modes spatiaux ; et
- atténuer sélectivement la puissance d'un premier mode spatial de la pluralité de modes spatiaux par rapport à la puissance d'un deuxième mode spatial de la pluralité de modes spatiaux à l'aide d'un corrélateur 4f (300).

14. Égaliseur de gain de mode spatial optique (300) comprenant un corrélateur 4f constitué des éléments suivants :
- une interface d'entrée (311) configurée pour positionner une face d'extrémité d'une première fibre multimode (301) à une première distance d'une première lentille (312), dans laquelle la première fibre multimode transporte une pluralité de modes spatiaux ayant une distribution de champ d'entrée au niveau de la face d'extrémité de la première fibre multimode (301) ;
- la première lentille (312) configurée pour effectuer une transformée de Fourier sur la distribution du champ d'entrée de la pluralité de modes spatiaux, produisant ainsi une distribution de champ transformée ;
- un masque de filtrage (313), en aval de la première lentille (312), configuré pour atténuer la distribution de champ transformée de sorte que la puissance d'un premier mode spatial de la pluralité de modes spatiaux soit atténuée sélectivement par rapport à la puissance d'un deuxième mode spatial de la pluralité de modes spatiaux ;
- une deuxième lentille (314) configurée pour effectuer une transformée de Fourier inverse sur la distribution de champ filtrée et transformée, produisant ainsi une distribution de champ de sortie ; et
- une interface de sortie (315) configurée pour positionner une face d'extrémité d'une deuxième fibre multimode (305) à une deuxième distance de la deuxième lentille (314), couplant ainsi la distribution de champ de sortie à la deuxième fibre multimode (305).
